# EUROPÄISCHE PATENTSCHRIFT

(11) **EP 2 313 189 B1**
(45) Veröffentlichungstag und Bekanntmachung des Hinweises auf die Patenterteilung: **06.07.2016**
(21) Anmeldenummer: 09741753.9
(22) Anmeldetag: 02.05.2009
(51) Int. Cl.: B01J 19/00, C13K 1/02, B01J 19/24, B01J 19/26

(54) **APPARATUR ZUR ENTFERNUNG VON HALOGENWASSERSTOFFSÄUREN AUS BIOMASSEHYDROLYSATEN**
APPARATUS FOR REMOVING HALOGEN HYDRACIDS FROM BIOMASS HYDROLYSATES
DISPOSITIF D'EXTRACTION D'HYDRACIDES HALOGÉNÉS CONTENUS DANS DES HYDROLYSATS DE BIOMASSE

(30) Priorität: 06.05.2008 DE 102008022242
(43) Veröffentlichungstag der Anmeldung: 27.04.2011
(73) Patentinhaber: Green Sugar Gmbh, Produktinnovationen Aus Biomasse, 01662 Meissen (DE)
(72) Erfinder: SCHMIDT, Matthias, 01097 Dresden (DE); KOSE, Frank, 131189 Berlin (DE)
(74) Vertreter: Gerber, Wolfgang
(86) Internationale Anmeldenummer: PCT/DE2009/000633
(87) Internationale Veröffentlichungsnummer: WO 2009/135480

(56) Entgegenhaltungen:
- EP-A- 0 018 621
- WO-A-99/06133
- DE-C- 362 230
- US-A- 5 868 851
- US-A1- 2003 013 606

## Beschreibung

### Stand der Technik

Es ist bekannt, das Biomassen, insbesondere pflanzliche, mittels der Behandlung von Säuren hydrolysiert werden können. Die Hydrolyse ist wirtschaftlich interessant, da mittels ihrer Wirkung polymere Kohlenhydrate wie zum Beispiel Zellulose und Hemizellulose, aber auch alle anderen Polykohlenhydrate, in ihre Monomere aufgespalten und damit der technischen Verwertung zur Verfügung gestellt werden können. Mit dem monomeren Kohlenhydrat ist ein Grundbaustein vorhanden, welcher als Ausgangspunkt für zahlreiche Stoffumwandlungsketten und damit Produktstammbäume zur Verfügung steht. Des Weiteren wird die Hydrolyse mittels hochkonzentrierter Halogenwasserstoffsäuren betrachtet. Diese haben die Eigenschaft, dass sie nach vollzogener Hydrolyse destillativ entfernt werden können. Dies hat den Vorteil, dass sie im Kreislauf gefahren bzw. wiederverwendet werden können. Im Folgenden betrachten wir die Hydrolyse mittels Chlorwasserstoffsäure exemplarisch, da diese im wirtschaftlichen Sinne die weiteste Verbreitung gefunden hatte. Dadurch wird die Wirkungsweise der Erfindung nicht berührt.

Die Hydrolyse mittels Chlorwasserstoffsäure erfolgt stets im wässrigen Milieu (in Wasser gelöstes Chlorwasserstoff wird weiterhin Salzsäure genannt) und in dafür vorgesehenen Reaktoren nach dem Extraktionsprinzip(siehe z.B. DE 927 139/ EP 1878480 A1). Im Resultat dieses Schrittes entstehen verschiedene Chargen an Hydrolysaten, welche je nach Fahrweise der Reaktoren unterschiedliche Mengen an Salzsäure (in Wasser gelöstes Chlowasserstoffgas) und aus der Biomasse herausgelöste Kohlenhydrate enthalten. Allen gemein ist jedoch die grundsätzliche Zusammensetzung aus Salzsäure, Kohlenhydraten und ebenfalls aus der Biomasse herausgelösten Begleitstoffen wie Aminosäuren, Mineralsalzen und anderen Stoffwechselzwischenprodukten. Für die weitere Behandlung ist es unumgänglich, die Salzsäure aus dem Gemisch zu entfernen, da, erstens, die Salzsäure einer Wiederverwendung zugeführt werden soll und zweitens, die Salzsäure bei einer Weiterverwendung der aus der Pflanze gewonnenen Wertstoffe störend wirkt. Die Effektivität sowie apparative Auslegung dieses Schrittes war seit jeher Foküs intensiver Entwicklungsbestrebungen, da die Entfernung der Salzsäure erhebliche Anforderungen an die verwendeten Materialien stellt und erhebliche Energiemengen benötigt werden. Damit ist dieser Zwischenschritt auf der Kostenseite für die Wirtschaftlichkeit des Gesamtprozesses maßgeblich mitbestimmend.

Die Abtrennung der Salzsäure wird mittels Destillation durchgeführt. Dazu wird der Umstand ausgenutzt, dass es sich, wie oben erwähnt, bei Salzsäure um in Wasser gelöstes Chlorwasserstoffgas handelt, welches mittels Erwärmung ausgetrieben werden kann. Zudem bilden Chlorwasserstoffgas und Wasser ein azeotropes Gemisch. Abhängig vom Druck über der Flüssigkeit stellt sich ein spezifisches Verhältnis von in Wasser gelöstem Chlorwasserstoffgas ein. Liegt die Konzentration von Chlorwasserstoff über diesem Punkt geht ausschließlich Chlorwasserstoff in die Gasphase über. Dieses Gemisch wird hier als überazeotropes Gemisch bezeichnet. Liegt die Konzentration von Chlorwasserstoff unter diesem Punkt geht ausschließlich Wasser in die Gasphase über. Wir sprechen an dieser Stelle von einem unterazeotropen Gemisch.

Die apparative Auslegung der Destillation erfolgte zumeist über von außen beheizte Verdampfer (vergleiche z.B. DBP 1059850). Es wurden große Anstrengungen unternommen, um Parameter wie die Verweilzeit des Hydrolysates und den Trenneffekt zu optimieren. Nachteil an dieser Technik ist der konstruktiv begrenzte Wärmestrom. Eine Wärmeübertragung erfolgt dabei immer über eine Trennwand. Diese stellt dem Wärmestrom einen Widerstand entgegen, so dass bei einem bestimmten Temperaturgefälle nur ein durch diesen Widerstand begrenzter Wärmestrom übertragen wird. Zudem ist der Gesamtwärmestrom durch die Austauschfläche begrenzt, welche die wärmetauschenden Medien benetzen.

Es ist eine technische Lösung bekannt, bei der eine nicht in Wasser lösliche Flüssigkeit als Wärmeträger direkt mit dem Hydrolysat vermischt wird (Deutsches Patent Nr.362230). Solche Flüssigkeiten sind zum Beispiel Schieferöle. Bei dieser technischen Lösung wird der Wärmeträger, wahlweise durch Abscheidung, von der Zuckerlösung entfernt, nachdem die Salzsäure vollständig aus dem Hydrolysat entfernt worden ist. Der Wärmeträger wurde danach zweierlei Behandlungen unterworfen, da sich in diesem zu geringen Teilen Salzsäure gelöst bzw. absorbiert hat. Zuerst wurde er getrocknet, das heißt, es wurde Wasser entfernt. Dies geschah durch Überleiten des Wärmeträgers über Kalziumchlorid. Hintergrund war die Aggressivität wässriger Salzsäure gegenüber metallischen Werkstoffen. Reste von Chlorwasserstoff verbleiben im Wärmeträger, sind nach Entwässerung jedoch nicht mehr aggressiv. Diese Reste wurden im zweiten Schritt durch thermisches Austreiben entfernt.

### Die Erfindung

Aufgabe der Erfindung ist es, die Behandlung des Gemisches aus Wärmeträger und Hydrolysat so zu führen, dass eine Entfernung von Wasser und Chlorwasserstoff in einem Schritt erfolgt. Dadurch kann eine Nachbehandlung des Wärmeträgers vermieden werden, der apparative Aufwand sinkt durch Verminderung der Prozessschritte. Bedingt durch die Führung kann die Apparatur teilweise in preiswerten Materialien ausgeführt werden.

### Beschreibung der Erfindung

Die Apparatur ist unterteilt in zwei Behälter, welche durch eine Rohrverbindung miteinander verbunden sind. Am Eingang des ersten Behälters werden zwei Ströme eingeführt. Der eine sind die Hydrolysate, bestehend aus den mittels wässriger Halogenwasserstoffsäuren aus der Biomasse herausgelösten Kohlenhydraten, Pflanzeninhaltsstoffen und Salzen und den gelösten Halogenwasserstoffsäuren selbst. Der andere ist ein erwärmter Wärmeträger, der sich nur im wirtschaftlich vertretbaren Ausmaß in den Hydrolysaten löst bzw. Bestandteile aus dem Hydrolysat anreichert. "Wirtschaftlich vertretbar" deshalb, da der Wärmeträger hier als Übertragungsmedium der thermischen Energie fungiert und nicht als Adsorbenz. Eventuelle Verunreinigungen durch die Aufnahme von Stoffen irgendwelcher Art bedürfen keiner zusätzlichen wirtschaftlichen Aufwendung in Form von weiteren Prozessschritten. Anwendbar sind zum Beispiel Öle paraffinischer Herkunft. Die Einführung beider Ströme erfolgt durch gemeinsames Versprühen in den ersten Behälter. Es ist unerheblich, ob die Versprühung über eine gemeinsame oder separate Düsen erfolgt. Wichtig im Sinne der Erfindung ist, dass über die Tröpfchenbildung beider Medien in einem gemeinsamen Raum eine innige Vermischung erfolgt und gleichzeitig die Flüssigkeitsoberfläche stark vergrößert wird.

Dies hat zufolge, dass eine sehr schnelle Wärmeübertragung zwischen Hydrolysat und Wärmeträger erfolgt. Halogenwasserstoff und Wasser gehen aufgrund dieser Wärmeübertragung vollständig in die Gasphase über. Aus den im Hydrolysat gelösten Inhaltsstoffen bilden sich kornartige Festkörper, die teilweise mit dem Wärmeträger benetzt sind. Diese Festkörper bzw. Wärmeträgertröpfchen werden aus dem Behälter 1 über ein Druckgefälle abgezogen. Dies geschieht vorteilhaft über einen Unterdruck am zweiten Behälter. Über diesen Unterdruck werden die Festkörper bzw. Öltröpfchen durch das Verbindungsrohr in den zweiten Behälter gezogen. Der zweite Behälter ist als Zyklon (Fliehkraftabscheider) ausgelegt, so dass hier eine vollständige Abtrennung des in die Gasphase übergegangenen Wassers bzw. Halogenwasserstoffs von den flüssigen und festen Bestandteilen des Stromes erfolgt. Eine entsprechende Anordnung des Verbindungsrohrs am Behälter 2 wird vorrausgesetzt. Am Ausgang des zweiten Behälters ergeben sich demnach wiederum zwei Ströme. Der eine entspricht dem Gasstrom in beschriebener Zusammensetzung. Der andere entspricht einer Suspension aus körnigen Festkörpern und den Wärmeträger.

Der erste Behälter kann eingeteilt werden in eine Einsprühzone und eine Verdampfungszone. Die hier auftretenden Temperaturen bewegen sich im Bereich zwischen 90°C und 120°C. Dieser Behälter wird deshalb aus Materialien gefertigt, die in diesem Temperaturbereich gegenüber Halogenwasserstoffsäuren unempfindlich sind. Durch den Verdampfungsprozess erfolgt im Verdampfungsbereich eine Temperaturabsenkung. Im zweiten Behälter können deshalb säurefeste Kunststoffe als Auskleidung eingesetzt werden, da die Temperatur hier in einem Bereich unter 70°C liegt. Solche säurefesten Materialien sind bzw. können sein:
- Polyvinylchlorid [PVC] (hart),
- PVC (nachchloriert),
- Polyethylen (PE),
- Polypropylen (PP),
- Polybutylen (PB),
- Polytetrafluorethylen (PTFE),
- Polyvinylidenfluorid (PVDF),
- Polyvinylfluorid (PVF),
- Ethylen-Propylen-Dien-Kautschuk (EPDM),
- Ethylen-Propylen-Copolymer,
- Ethylen-Tetrafluorethylen (ETFE),
- Perfluor-Ethylen-Propylen-Kunststoff (FEP),
- Fluor-Polymer_Kunststoffe (FPM und FKM = Gruppenbezeichnung),
- Perfluortrifluorethylen (PCTFE),
- Perfluorierter Kautschuk (FFPM und FFKM),
- Butylkautschuk (IIR),
- Isoprenkautschuk (IR),
- Chloriertes Polyethylen (PE-C),
- Gummi (Sammelbezeichnung für Kautschuke mit Schwefel) sowie Copolymere und Mischungen aus diesen Polymeren sein können

Dies ist im Sinne der Erfindung wichtig, da sich diese Möglichkeit explizit aus der vorangegangenen Gestaltung der Wärmeübertragung (Versprühung und Verdampfung inkl. Abkühlung) ergibt und wirtschaftlich relevant ist. Durch Einsatz dieser preiswerten Kunststoffe können potentiell Investkosten gespart werden, da alternative Materialien zum Beispiel in Form von Keramiken höhere Kosten hervorrufen.

Zusammengefasst hat die dargestellte Apparatur demnach folgende Vorteile:
- Halogenwasserstoff und Wasser werden vollständig in einem Schritt entfernt.
- Eine Nachbehandlung des Wärmeträgers in Form einer Entwässerung bzw. Halogenwasserstoffentfernung entfällt.
- Die Apparatur kann durch die effektive Gestaltung der Wärmeübertragung teilweise in preiswerten Materialien ausgeführt werden.

## Patentansprüche

1. Verfahren zur Entfernung von Halogenwasserstoff und Wasser aus Hydrolysaten, die mittels halogensaurer Hydrolyse aus pflanzlichen Biomassen gewonnen wurden, **gekennzeichnet dadurch:**
a. **dass** einem Behälter zwei Stoffströme zugeführt werden, wobei der erste Stoffstrom die Hydrolysate sind und der zweite Stoffstrom eine erhitzte Wärmeträgerflüssigkeit, vorzugsweise eines Öles paraffiner Herkunft, ist,
b. **dass** beide Ströme in dem ersten Behälter unter inniger Vermischung bei Wärmeübertragung im Temperaturbereich zwischen 90 Grad C bis 120 Grad C von den Wärmetragerflüssigkeitströpfchen auf die Hydrolysatflüssigkeitströpfchen gemeinsam versprüht werden, wobei gleichzeitig eine vollständige Verdampfung des im Hydrolysat enthaltenen Wassers sowie des im Hydrolysat gelösten Halogenwasserstoffs eintritt,
c. **dass** ein während der Verdampfung ausfallendes Gemisch aus körnigen Feststoffteilchen und Wärmeträgertröpfchen mittels eines Druckgefälles aus dem ersten Behälter über ein Verbindungsrohr in einen zweiten Behälter abgezogen wird,
d. **dass** in dem als Zyklon bzw. Fliehkraftabscheider ausgebildeten zweiten Behälter eine Abtrennung von flüssigen Wärmeträgerflüssigkeitströpfchen und körnigen Feststoffteilchen vom Gasstrom mit anschließender getrennter Ableitung erfolgt.

2. Verfahren nach Anspruch 1, wobei der zweite Behälter innenwandig mit Polyvinylchlorid hart, PVC nachchloriert, Polyethylen, Polypropylen, Polybutylen, Polytetrafluorethylen, Polyvinylidenfluorid, Polyvinylfluorid, Ethylen-Propylen-Dien-Kautschuk, Ethylen-Propylen-Copolymer, Ethylen-Tetrafluorethylen, Perfluor-Ethylen-Propylen-Kunststoff, Fluor-Polymer_Kunststoffe, Perfluortrifluorethylen, Perfluorierter Kautschuk, Butylkautschuk, Isoprenkautschuk, Chloriertes Polyethylen oder Gummi sowie Copolymere und Mischungen aus diesen Polymeren ausgekleidet ist oder aus diesen Materialien besteht.

## Claims

1. Method for removing hydrogen halide and water from hydrolysates obtained by halogen hydracid hydrolysis from plant biomasses, **characterized in that**
a. a container is supplied with two material streams, wherein the first material stream are the hydrolysates and the second material stream is a heated heat-transfer liquid, preferably an oil of paraffinic origin,
b. both streams are spray-dispensed together in the first container with intimate mixing and heat transfer in the temperature range between 90 degrees C to 120 degrees C from the heat-transfer liquid droplets to the hydrolysate liquid droplets, wherein the water present in the hydrolysate and the hydrogen halide dissolved in the hydrolysate simultaneously undergo complete evaporation,
c. a mixture of granular solid particles and heat-transfer medium droplets which precipitates during the evaporation is drawn off from the first container into a second container via a connecting pipe by means of a pressure gradient,
d. a removal of liquid heat-transfer liquid droplets and granular solid particles from the gas stream with subsequent separate discharge is effected in the second container which is configured as a cyclone/centrifugal separator.

2. Method according to Claim 1, wherein the second container is lined on its inner wall with rigid polyvinyl chloride, post-chlorinated PVC, polyethylene, polypropylene, polybutylene, polytetrafluoroethylene, polyvinylidene fluoride, polyvinyl fluoride, ethylene-propylene-diene rubber, ethylene-propylene copolymer, ethylenetetrafluoroethylene, perfluoroethylene-propylene plastic, fluoropolymer plastics, perfluorotrifluoroethylene, perfluorinated rubber, butyl rubber, isoprene rubber, chlorinated polyethylene or rubber and copolymers and mixtures of these polymers or consists of these materials.

## Revendications

1. Procédé pour éliminer de l'hydracide halogéné et de l'eau à partir d'hydrolysats, qui ont été obtenus par hydrolyse par un acide halogéné à partir de biomasses végétales, **caractérisé**
a. **en ce que** deux flux de substances sont introduits dans un récipient, le premier flux de substances étant les hydrolysats et le deuxième flux de substances étant un liquide caloporteur chauffé, de préférence une huile d'origine paraffinique,
b. **en ce que** les deux flux sont pulvérisés ensemble dans le premier récipient, avec un mélange intime, avec un transfert thermique dans la plage de température entre 90°C et 120°C des gouttelettes de liquide caloporteur aux gouttelettes de liquide d'hydrolysat, une évaporation complète de l'eau contenue dans l'hydrolysat ainsi que de l'hydracide halogéné dissous dans l'hydrolysat se produisant simultanément,
c. **en ce qu'**un mélange, précipitant pendant l'évaporation, de particules solides granulaires et de gouttelettes de caloporteur, est soutiré au moyen d'un gradient de pression du premier récipient, via un tuyau de liaison, dans un deuxième récipient,
d. **en ce qu'**une séparation de gouttelettes liquides de liquide caloporteur et de particules solides granulaires du flux gazeux, avec évacuation séparée consécutive, a lieu dans le deuxième récipient conçu sous forme de cyclone ou de séparateur centrifuge.

2. Procédé selon la revendication 1, le deuxième récipient étant revêtu, sur la paroi interne, de poly(chlorure de vinyle) dur, de PVC post-chloré, de polyéthylène, de polypropylène, de polybutylène, de polytétrafluoroéthylène, de poly(fluorure de vinylidène), de poly(fluorure de vinyle), de caoutchouc d'éthylène-propylène-diène, de copolymère d'éthylène-propylène, d'éthylène-tétrafluoroéthylène, de matériau synthétique de perfluoro-éthylène-propylène, de matériaux synthétiques de fluoropolymère, de perfluorotrifluoroéthylène, de caoutchouc perfluoré, de caoutchouc de butyle, de caoutchouc d'isoprène, de polyéthylène chloré ou de caoutchouc ainsi que de copolymères et de mélanges de ces polymères ou étant constitué par ces matériaux.
